# EUROPEAN PATENT SPECIFICATION

(11) **EP 0 467 431 B1**
(45) Date of publication and mention of the grant of the patent: **01.03.1995**
(21) Application number: 91201515.3
(22) Date of filing: 17.06.1991
(51) Int. Cl.: G08B 3/10

(54) **Personal paging system**
Personenrufempfängeranlage
Système d'appel de personnes

(30) Priority: 17.07.1990 NL 9001625
(43) Date of publication of application: 22.01.1992
(73) Proprietor: ERICSSON RADIO SYSTEMS B.V., 7814 VA Emmen (NL)
(72) Inventor: Slot, Gerrit, NL-7691 CD Bergentheim (NL)
(74) Representative: van der Arend, Adrianus G.A., Ir.

(56) References cited:
- EP-A- 0 317 230
- GB-A- 1 399 508
- US-A- 3 805 227
- US-A- 3 808 538
- US-A- 4 688 026

## Description

The invention relates to a personal paging system comprising:
a central main station having a processing unit, which is connected to control means and a main transmission circuit and which, depending on the control signals received by the control means, transmits, via the main transmission circuit, a paging signal which comprises an identification number of a portable paging unit and an information section;
and a number of portable paging units, each having a receiving circuit which is tuned for receiving a paging signal, a decoder which separates the identification number and the information section from a received paging signal, a register which stores an identification number assigned to the paging unit, a comparator which compares the received and assigned identification numbers, alerting means, and a processing circuit which, depending on the result of the comparison, releases the alerting means for generating an alert dependent on the received information section.

A personal paging system of this type is known in practice. The control means generally consist of a control panel in the main station and are often also suitable for connection to a telephone exchange (PABX) for receiving control signals via a telephone connection.

EP-A-0 317 230 discloses such a system, in which a memory can store a conditional command for generating an alert intended for a user of the paging system and having means for inputting conditional commands into the memory.

The aim of the invention is to expand the possibilities of a personal paging system of this type.

For the personal paging system of the type mentioned in the preamble, this is achieved by adding a memory which can store a conditional command for generating an alert intended for a user of a paging system;
means for inputting conditional commands into the memory;
detection means which detect whether a user of a paging unit enters or leaves a specific area or system and which, after detection of such a passage, control the system, if a conditional command intended for the paging unit is stored in the memory, to generate an alert associated with the command. By this means it is possible for a user of the paging unit or another person to store a conditional command for the transmission of a paging or call signal in the memory and for a message corresponding to the command to be presented to a user of a paging unit indicated by means of the command, if this user enters or leaves a specific area or system.

The area can be limited by racks, placed at the exits of a building or site, in which the users must place their paging unit when leaving the area. The area can also be limited by one or more detection stations which are installed at respective exits from specific parts of a building, such as rooms, or from a site or at exits therefrom and which detect the passage of paging unit users. The system which the user enters or leaves can be, for example, a time recording system which records the time worked by the user. The system which the user enters or leaves can also be a computer system in order to remind the user to carry out certain operations when he or she has entered or left the computer system. The memory for the storage of conditional commands can be a memory of the main station, in which case the alert is activated from the main station when a passage occurs. The alert can be generated by the transmission of a relevant paging signal or a control signal can be fed via a conductor to an alerting device in the vicinity of the user or, if the paging unit is placed in a rack, via galvanic contacts to the alerting device of the paging unit for generating the alert associated with the command.

The memory for the storage of conditional commands can also be a memory of the paging unit, in which case the paging unit itself detects whether a passage occurs and the generation of an alert as a consequence of the occurrence of a passage and the presence of a conditional command in the memory is initiated by the paging unit itself. The detection of a passage can take place by using local transmitting stations which transmit an activation signal and by use of a receiving circuit, tuned for receiving such a signal, in a paging unit, a processing circuit of the paging unit indicating the occurrence of a passage when such a signal is received. The detection of a passage can also take place by use of a switch or contacts in the wall of a casing of the paging unit which is actuated on placing in the rack or can be short-circuited by short-circuit contacts in the rack. The detection of a passage can also take place by monitoring a charging current to the paging unit when the paging unit is placed in a charging rack for charging a battery of the paging unit.

The invention is illustrated with reference to the drawings. In the drawings:
Fig. 1 shows an embodiment of a personal paging system according to the invention;
Fig. 2 shows a block diagram of a portable paging unit for use in a personal paging system having the main station of Fig. 1;
Fig. 3 shows a block diagram of a local demand station for use in a personal paging system having a main station as in Fig. 1;
Fig. 4 shows a block diagram of a section of a portable paging unit of the type as in Fig. 2;
Fig. 5 shows a block diagram of another embodiment of a personal paging system according to the invention;
Fig. 6 shows a block diagram of a portable paging unit for use in a personal paging system having a main station as in Fig. 5; and
Fig. 7 shows a block diagram of a local activating station for a personal paging system having paging units of the type shown in Fig. 6.

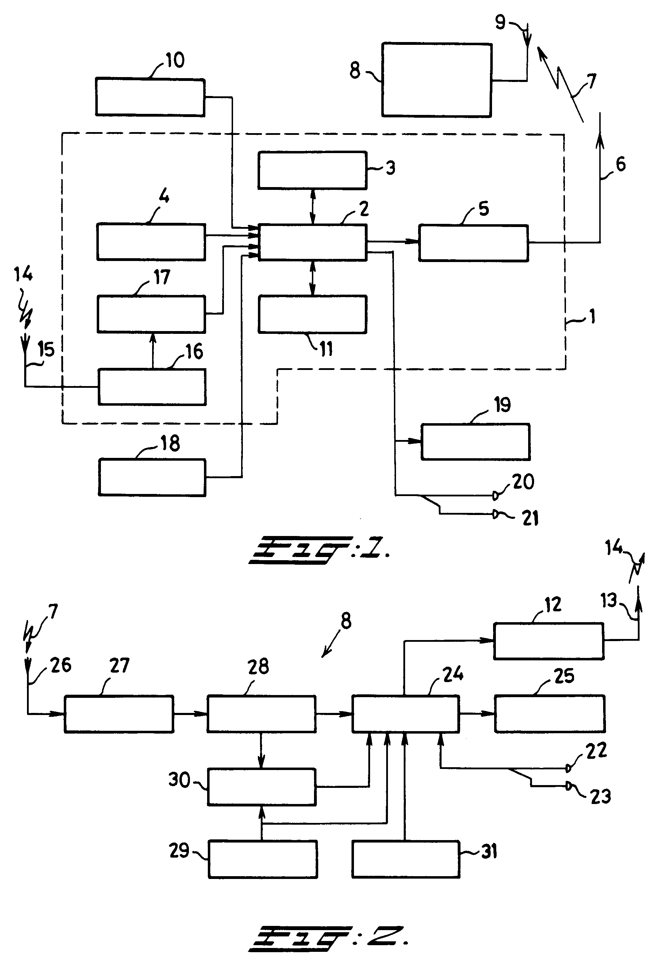

Fig. 1 shows an extensive first embodiment of a personal paging system according to the invention, having a main station 1. The main station 1 has a processing unit 2 which is connected to a memory 3, in which a program for the functioning of the unit 2 can be stored, control means, such as a control panel, 4 and a transmission circuit 5 for transmitting a paging signal 7 via an aerial 6. By means of the control means 4, control signals can be supplied to the processing unit 2 for transmitting, via the transmission circuit 5, the paging signal 7 which contains an identification number assigned to a paging unit 8 and an information section. The paging unit 8 has an aerial 9 for receiving the paging signal 7.

The processing unit 2 can also be connected to a telephone exchange (PABX) 10 for receiving control signals via a telephone connection.

According to the invention, the main station 1 also has a memory 11 for storing therein conditional commands which are intended for the transmission of a paging signal 7 containing an identification number indicated by the command if a user of a paging unit 8 having this identification number enters or leaves a specific area or system. A conditional command also contains data for the information section of the paging signal 7.

The conditional commands can be input into the memory 11 in various ways.

According to a first way, the conditional commands are input into the memory 11 via the control means 4 or the telephone exchange 10 and the processing unit 2. By this means any person can input a conditional command for himself or for someone else into the memory 11.

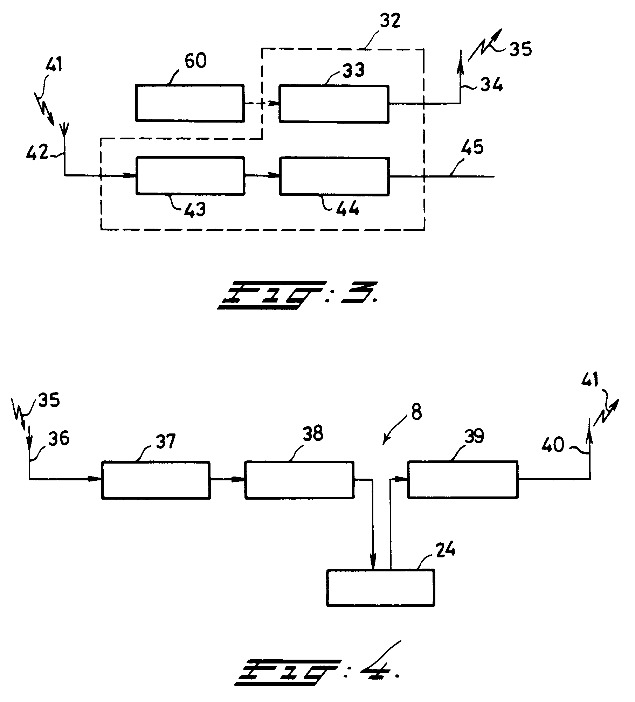

According to a second way, a paging unit 8, as shown in Fig. 2, has a transmission circuit 12 for transmitting therewith, via an aerial 13 of the paging unit 8, a programming signal which contains a conditional command containing the identification number of the paging unit. The programming signal 14 can be received by an aerial 15 at the main station 1 and by a receiving circuit 16 tuned for receiving the programming signal 14. A decoder 17 separates the conditional command from a received programming signal and supplies this to the processing circuit 2 for storage in the memory 11 for the received identification number.

According to the invention, detection means 18, which detect whether a user of a paging unit enters or leaves a specific area or system, are also connected to the main station 1, in particular to the processing unit 2 thereof. When such a passage occurs, the detection means 18 supply a passage signal to the processing unit 2. The detection means 18 can be constituted of a presence detection system such as of the type described in Netherlands Patent Application 90.01318, which was filed by the Applicant on 11 June 1990, with which the presence of portable paging units 8 in a rack, in particular a charging rack for charging a battery of the paging units 8, is detected. The system described in said patent application is now applied to transmit a paging signal 7 depending on whether or not a presence of paging units in the rack is detected.

The detection means 18 can also consist of a time recording system which is known per se and is used for recording the time worked by persons inside a building or site. It is known that such time recording systems themselves comprise a computer or can be connected to a central computer for processing and storing times worked. It is believed that it will be simple for an expert to derive a passage signal from such a time recording system, which signal indicates that a user of a paging unit has clocked in or clocked out and accordingly has entered or left the building or the site.

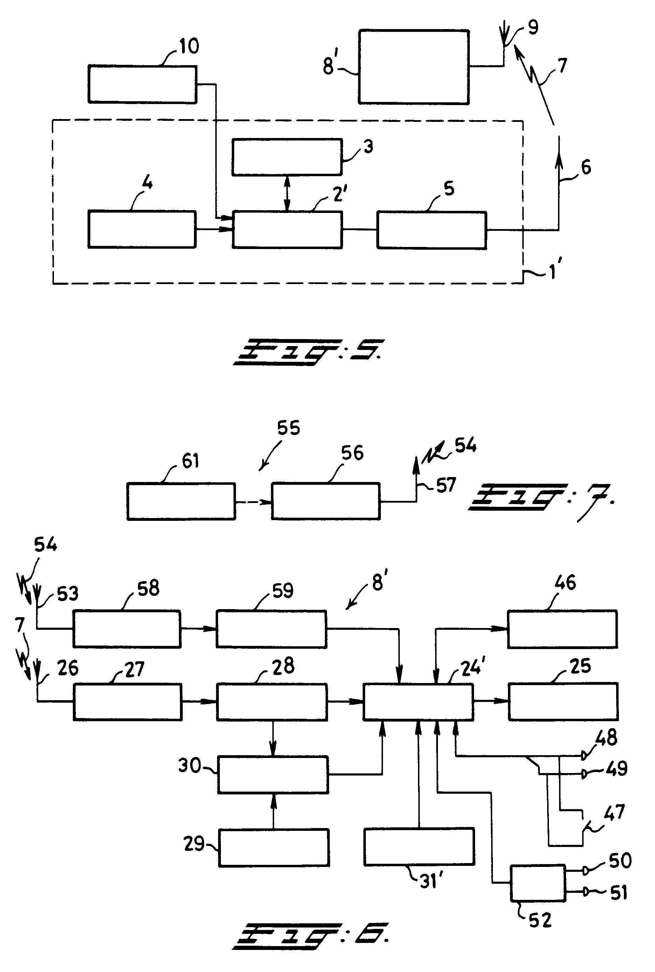

A third embodiment of the detection means 18 will be explained, after a further explanation of Figs. 1 and 2, with reference to Figures 3 and 4.

If the processing unit 2 of the detection means 18 receives a passage signal it is possible in various ways to generate, or to cause to generate, an alert for the user of the relevant paging unit 8. According to a first way, the main station 1 transmits a paging signal 7 which contains the identification number of concern and the relevant conditional command. The information section of the paging signal 7 can then be presented in a known manner by the paging unit 8 paged by said identification number to the user of that unit.

According to a second way, the transmission unit 2 supplies a control signal to an alerting device 19 which is installed in the vicinity of the location where the passage has been detected, that is to say where the user of the paging unit 8 is located.

According to a third way, it is possible, if the paging unit 8 is placed in a rack, for such a control signal also to be supplied to a pair of contacts 20, 21 which are fitted in the relevant slot of the rack and which touch contacts 22, 23 (Fig. 2) of the paging unit 8 for controlling a processing circuit 24 of the paging unit 8 and for presenting the alert by means of an alerting means 25 of the paging unit 8. The paging unit 8 can have several alerting means 25 and each alerting means can be suitable for giving an acoustical, mechanical (vibration) or optical signal or for presenting a text on a display. Within the scope of the invention it is, of course, also possible to transmit the control signal to the control unit 8 in another way, for example via an inductive, optical or acoustic path.

The paging unit 8, for which Fig. 2 shows a block diagram, comprises, in addition to at least the said processing unit 24 and the alerting means 25, an aerial 26 for receiving the paging signal 7, a receiving circuit 27 tuned for receiving the paging signal 7, a decoder 28, which separates the identification number and information section from a received paging signal 7, a register 29, in which an identification number assigned to the paging unit 8 has been stored beforehand, and a comparator 30 which compares the received and pre-stored identification numbers and, if these are identical, controls the processing circuit 24 for the release of the alerting means 25 for generating an alert which is in accordance with the information section of the received paging signal 7. The paging unit 8 also has operating means, such as switches, 31 which are connected to the processing circuit 24 and with which a specific operating mode can be selected. A paging unit 8 which, at a minimum, has at least these components 24 to 31 inclusive has been disclosed, for example, in NL-A-8000578 (corresponding to US-A-4,422,071).

If the paging unit 8 as shown in Fig. 2 also comprises the transmission circuit 12 for the transmission of the programming signal 14, the processing circuit 24 is also connected to the register 29 so that the processing circuit 24 can place the identification number assigned to the paging unit 8 in the programming signal 14 and the operating means 31 are suitable for further collating and activating the transmission of the programming signal 14.

Fig. 3 shows a block diagram of a local scanning or query station 32, which, for example is fitted by a door, and it has a transmission circuit 33 for transmitting, via an aerial 34, a query signal 35 which, as explained below, is intended for a passing paging unit.

Fig. 4 shows a block diagram of a section of the paging unit 8 shown in Fig. 2, with or without the transmission circuit 12, the aerial 13 and the contacts 22 and 23. According to the diagram in Fig. 4, the paging unit 8 also comprises an aerial 36 for receiving the query signal 35, a receiving circuit 37 tuned for receiving the query signal 35, optionally a decoder 38, which decodes the received query signal 35, and a transmission circuit 39 which, via an aerial 40, in response to the receipt of a query signal 35 and processing thereof by the processing circuit 24, transmits, via an aerial 40, a response signal 41 which contains the identification number assigned to the paging unit 8.

The query station 32 also has an aerial 42 for receiving the response signal 41, a receiving circuit 43, which is tuned for receiving the response signal 41, and a decoder/control circuit 44 which separates the identification number from the response signal 41 and, via a connection 45, which corresponds to the connection at the output from the detection means 18, supplies it to the processing unit 2 of the main station 1. By this means the signal can be interpreted via the connection 45 as a passage signal and can be processed as such by the processing unit 2.

Fig. 5 shows a block diagram of another embodiment of a main station 1′ having a processing unit 2′ and also the memory 3, which is not intended for storing conditional commands, the control means 4 and the transmission circuit 5 for transmitting, via the aerial 6, a paging signal 7 to a portable paging unit 8′ according to the invention. The processing unit 2′ can be connected in the same way as the processing unit 2 to a telephone exchange 10 for receiving control signals therefrom. A main station 1′ of this type is known in practice.

Fig. 6 shows a block diagram of a paging unit 8′ of a personal paging system according to the invention, comprising a main station 1′ as in Fig. 5. The paging unit 8′ comprises, in addition to the processing circuit 24′, the alerting means 25, the aerial 26, the receiving circuit 27, the decoder 28, the register 29, the comparator 30, operating means 31′ and, according to the invention, a memory 46 which is intended for storing therein, by means of the operating means 31′ and the processing circuit 24′, at least one conditional command.

In this embodiment of the personal paging system, whether a user of the paging unit 8′ enters or leaves a specific area or system is detected in the paging unit 8′ in order to generate, depending on detection of such a passage, via the processing unit 24′ with the alerting means 25, an alert which corresponds to a conditional command stored in the memory 46. Such a passage can be detected, for example, if the paging unit 8′ is placed in a rack (not shown). To this end, the paging unit 8′ can have a switch 47 which is connected to the processing circuit 24′ and is fitted in a wall of the housing and which is closed (or opened) when the paging unit 8′ is placed in the rack. Contacts 48, 49 can also be fitted in the wall of the housing, which contacts are short-circuited by contacts in the rack when the paging unit 8′ is placed in the rack. If the rack is a charging rack for charging a battery (not shown) of the paging unit 8′ via contacts 50, 51, which are fitted in a wall of the casing of the paging unit 8′, a detection circuit 52, which is connected to the processing circuit 24′, can be used for monitoring the charging current. If the detection circuit 52 detects the start or end of a charging current, this corresponds to the detection of a passage. It is pointed out here that when chargeable batteries are charged a charging current generally always flows, although the charging current is small in the case of an essentially charged battery.

The paging unit 8′ can be designed in various other ways in order to detect that it is placed in a rack, for example by means of inductive or optical means.

For detecting a passage, the paging unit 8′ can also have an aerial 53 for receiving an activating signal 54 which is transmitted by a local activating station 55, a block diagram of which is shown in Fig. 7, having a transmission circuit 56 and an aerial 57. The paging unit 8′ then also has a receiving circuit 58, which is tuned for receiving the activating signal 54, and optionally a decoder/control circuit 59 for controlling the processing circuit 24′ for reading the memory 46 on receipt of an activating signal 54 and for generating an alert, using the alerting means 25, in accordance with a conditional command which may be read from the memory 46.

It is pointed out that within the scope of the invention various modifications are possible. The local query station 32 shown in Fig. 3 and the local activating station 55 shown in Fig. 7 can, for example, be connected to a detection/activation circuit 60 or 61 respectively, which, for example by disrupting a light ray, detect whether a person passes the local station 32, 55 and in response thereto actuates the relevant transmission circuit 33 or 56 respectively for transmitting the query signal 35 or, respectively, the activation signal 54 only if such passage is detected.

Furthermore, the transmission circuits 33, 39 and 56 and the receiving circuits 37, 43 and 58 can be circuits for acoustic, optical or inductive transmission.

Furthermore, the memories 3 and 11 of the main station 1 shown in Fig. 1 can be part of a single memory.

Moreover, the number of ways actually used for detection of a passage and the number of ways for the generation of an alert can be restricted for practical embodiments.

The embodiments according to Figures 1 to 4 inclusive, that is to say the embodiment having the memory 11 for the storage of conditional commands in the main station 1, can also be combined with the embodiment according to Figures 5 to 7 inclusive, in which the paging unit 8 or 8′ has a memory 46 for storing conditional commands. By means of this combination, the user of a paging unit 8 or 8′ does not need to place a load on the central system himself but is able to store a conditional command programmed by himself in the memory 46 and another person can store a conditional command intended for this user in the memory 11 of the main station 1.

It is also possible that a conditional command stored in the memory 11 of the main station 1 comprises a reference number, the value of which corresponds to a predetermined text which is stored in a memory of the paging unit 8, 8′.

Within the scope of the invention, another embodiment is also possible, which is similar to the embodiment explained with reference to Figs. 3 and 4, with which a portable unit disrupts a field generated by a continuous transmitter in accordance with an identification number of the unit and with specific information, in particular a conditional command, and the transmission circuit detects this disruption and derives therefrom the identification number and the conditional command.

Within the scope of the invention, a system is also possible which has a main station of the type shown in Fig. 1 or in Fig. 5 and a personal paging unit having a memory for storing at least one conditional command, such as the memory 46 of the paging unit 8′ shown in Fig. 6. In a system of this type, a person is able, via control means 4, 10, 16, 17 connected to the processing unit 2 of the main station, to command the main station 1 to transmit a paging signal having the identification number of a specific paging unit and a conditional command intended for this paging unit, which command, on receipt thereof by the processing circuit 24′ of the paging unit, can be stored in the said memory 46. If a passage occurs, this conditional command can be processed in the same way as explained above with reference to Figures 5 and 6. By this means the main station 1 can be relieved of the task of detecting passages and the paging units can do this autonomically.

It is also pointed out that a conditional command can comprise various conditions, an alert being generated on the occurrence of a passage only if these conditions are met. Examples of such conditions are data and time ranges on which or in which detection of a passage can have consequences.

## Claims

1. Personal paging system comprising:
a central main station having a processing unit, which is connected to control means and a main transmission circuit and which, depending on the control signals received by the control means, transmits, via the main transmission circuit, a paging signal which comprises an identification number of a portable paging unit and an information section;
and a number of portable paging units, each having a receiving circuit which is tuned for receiving a paging signal, a decoder which separates the identification number and the information section from a received paging signal, a register which stores an identification number assigned to the paging unit, a comparator which compares the received and assigned identification numbers, alerting means, and a processing circuit which, depending on the result of the comparison, releases the alerting means for generating an alert dependent on the received information section,
a memory which can store a conditional command for generating an alert intended for a user of the paging system;
means for inputting conditional commands into the memory;
characterised by
detection means which detect whether a user of a paging unit enters or leaves a specific area or system and which, after detection of such a passage, control the system, if a conditional command intended for the paging unit is stored in the memory, to generate an alert associated with the command.

2. Personal paging system according to claim 1, characterised in that the memory is a memory of the main station and in that the detection means, on detection of a passage, determine the identification number of the paging unit of the user, the detection means then read the memory to check whether a conditional command is stored for this identification number and, if this is the case, control the system to generate an alert associated with the command.

3. Personal paging system according to claim 2, characterised in that the input means consist of the control means.

4. Personal paging system according to claim 2, characterised in that a paging unit has a transmission circuit, which, via an operating means, can be activated by the user of the paging unit to transmit a programming signal which contains the identification number of the paging unit and a conditional command, the main station has a receiving circuit which is tuned for receiving the programming signal and the main station, on receipt of a programming signal, stores the conditional command thereof for the associated identification number in the memory.

5. Personal paging system according to one of claims 1 to 4, characterised in that the detection means comprise a detection system which, outside the paging units, detects the presence of a paging unit in a slot of a storage rack.

6. Personal paging system according to one of claims 1 to 4, characterised in that the detection means comprise a time recording system which records the presence of users of paging units.

7. Personal paging system according to one of claims 1 to 4, characterised in that the detection means comprise a local query station having a transmission circuit for transmitting a query signal, a paging unit comprises a receiving circuit which is tuned for receiving the query signal, the paging unit, on receipt of a query signal, generates a response signal which contains the identification number of the paging unit, and the detection means comprise means for detecting the response signal and for separating the identification number therefrom.

8. Personal paging system according to one of claims 2 to 7, characterised in that the control of the system by the detection means consists in the control of the processing unit of the main station for the transmission of a paging signal which contains the identification number belonging to the conditional command and an associated information section.

9. Personal paging system according to one of claims 2 to 7, characterised in that the control of the system by the detection means consists in the control of the processing unit of the main station for supplying, via a conductor, a control signal for the generation of an alert to an alerting means installed in the vicinity of the user.

10. Personal paging system according to one of claims 2 to 7, characterised in that the control of the system by the detection means consists in the control of the processing unit of the main station for supplying, via a conductor and via transmission means of the paging unit and of a rack in which the paging unit is placed, a control signal to the alerting means of the paging unit for generating an alert.

11. Personal paging system according to claim 1, characterised in that the memory is a memory of the paging unit, in that the paging unit has operating means for inputting a conditional command into the memory, and in that the detection means, on detection of a passage, read the memory to check whether a conditional command is present in the memory and, if this is the case, control the alerting means of the paging unit to generate an alert associated with the command.

12. Personal paging system according to claim 1, characterised in that the information section of a paging signal can contain a conditional command, the main station can, depending on control signals received by the station, transmit a paging signal containing a conditional command, the memory is a memory of the paging unit, the processing circuit of a paging unit, on receipt of a paging signal containing a conditional command intended for the paging unit, places the conditional command in the memory, and the detection means, on detection of a passage, read the memory to check whether a conditional command is present in the memory and, if this is the case, control the alerting means of the paging unit to generate an alert associated with the command.

13. Personal paging system according to claim 11 or 12, characterised in that the detection means comprise switching means which are fitted within each paging unit and which indicate the occurrence of a passage when the paging unit is placed in or removed from a rack.

14. Personal paging system according to claim 11 or 12, characterised in that the switching means consist of contacts of the paging unit and a pair of short-circuit contacts of a rack which short-circuit the contacts of the paging unit after the paging unit is placed in the rack.

15. Personal paging system according to claim 11 or 12, characterised in that the switching means comprise a detection element which detects whether a charging current is flowing from the rack to the paging unit and the detection element indicates a passage on detection of a current starting or ceasing.

16. Personal paging system according to claim 11 or 12, characterised in that the detection means comprise a local activating station which transmits an activating signal, a paging unit has another receiving circuit which is tuned to receive the activating signal and a processing circuit of the paging unit, connected to the other receiving circuit, indicates a passage on receipt of the activating signal.

17. Personal paging system according to one of the preceding claims, characterised in that a conditional command contains a reference number which refers to a number of messages previously stored in a memory of the main station or in a display memory of a paging unit and, when the system is controlled to generate an alert, the system reads from the memory a message belonging to one value of the reference number of the conditional command and presents it to the user of the paging unit.

## Patentansprüche

1. Personenrufsystem bestehend aus:
einer zentralen Basisstation mit einem Prozessor, der mit einer Steuereinrichtung und einer Hauptübertragungsschaltung verbunden ist, und welche, abhängig von den durch die Steuereinrichtung empfangenen Steuersignalen ein Rufsignal, das eine Identifikationsnummer einer tragbaren Rufeinheit und einen Informationsteil umfaßt, über die Hauptübertragungsschaltung überträgt;
einer Anzahl von tragbaren Rufeinheiten, von denen jede einen Empfangsschaltkreis aufweist, welcher für den Empfang eines Rufsignals abgestimmt ist, einen Decodierer, welcher die Identifikationsnummer und den Informationsteil von einem empfangenen Rufsignal trennt, ein Register, welches eine der Rufeinheit zugeordneten Identifikationsnummer speichert, einen Komparator, der die empfangenen und zugeordneten Identifikationsnummern vergleicht, Warneinrichtungen und einen Rechnerschaltkreis, der abhängig vom Ergebnis des Vergleichs die Warneinrichtung zur Erzeugung eines Warnsignals, abhängig vom empfangenen Informationsteil, auslöst,
einem Speicher, der einen bedingten Befehl zur Erzeugung eines Warnsignals, das für den Benutzer des Rufsystems bestimmt ist, speichern kann,
und Einrichtungen für die Eingabe von bedingten Befehlen in den Speicher,
gekennzeichnet durch
Erkennungseinrichtungen, die erkennen ob ein Benutzer einer Rufeinheit ein spezifisches Gebiet oder System betritt oder verläßt und die nach Erkennung eines solchen Übergangs das System ansteuern, wenn ein für die Rufeinheit bestimmter bedingter Befehl im Speicher gespeichert ist, um ein dem Befehl zugeordnetes Warnsignal zu erzeugen.

2. Personenrufsystem nach Anspruch 1, dadurch gekennzeichnet, daß der Speicher ein Speicher der Basisstation ist, daß die Erkennungseinrichtungen beim Erkennen eines Übergangs die Identifikationsnummer der Rufeinheit des Benutzers bestimmen und daß die Erkennungseinrichtungen dann den Speicher lesen, um zu überprüfen, ob ein bedingter Befehl für diese Identifikationsnummer gespeichert ist und wenn dies der Fall ist, das System ansteuern, um ein dem Befehl zugehöriges Warnsignal zu erzeugen.

3. Personenrufsystem nach Anspruch 2, dadurch gekennzeichnet, daß die Eingabeeinrichtungen aus den Steuereinrichtungen bestehen.

4. Personenrufsystem nach Anspruch 2, dadurch gekennzeichnet, daß die Rufeinheit eine Übertragungsschaltung besitzt, welche über eine Bedienungseinrichtung durch den Benutzer der Rufeinheit aktiviert werden kann, um ein Programmiersignal, welches die Identifikationsnummer der Rufeinheit und einen bedingten Befehl enthält, zu übertragen, wobei die Basisstation einen Empfangsschaltkreis hat, welcher zum Empfangen des Programmiersignals abgestimmt ist, und die Basisstation beim Empfang eines Programmiersignals den zur Identifikationsnummer gehörigen bedingten Befehl im Speicher speichert.

5. Personenrufsystem nach einer der Ansprüche 1 bis 4, dadurch gekennzeichnet, daß die Erkennungseinrichtungen ein Erkennungssystem umfassen, welches außerhalb der Rufeinheiten das Vorhandensein einer Rufeinheit in einem Schlitz eines Aufbewahrungsgestells erkennt.

6. Personenrufsystem nach einer der Ansprüche 1 bis 4, dadurch gekennzeichnet, daß die Erkennungseinrichtungen ein Zeiterfassungssystem, das die Anwesenheit von Benutzern von Rufeinheiten aufzeichnet, umfassen.

7. Personenrufsystem nach einem der Ansprüche 1 bis 4, dadurch gekennzeichnet, daß die Erkennungseinrichtungen eine lokale Abfragestation mit einer Übertragungsschaltung für die Übertragung eines Abfragesignals umfaßt, daß eine Rufeinheit einen Empfangsschaltkreis, der auf den Empfang eines Abfragesignals abgestimmt ist, umfaßt, wobei die Rufeinheit beim Empfang eines Abfragesignals ein Antwortsignal erzeugt, das die Identifikationsnummer der Rufeinheit enthält, und die Erkennungseinrichtungen Organe für die Erkennung des Antwortsignals und für die Trennung der Identifikationsnummer von diesem umfaßt.

8. Personenrufsystem nach einer der Ansprüche 2 bis 7, dadurch gekennzeichnet, daß die Steuerung des Systems durch die Erkennungseinrichtungen in der Steuerung des Prozessors der Basisstation zur Übertragung eines Rufsignals, das eine zum bedingten Befehl und dem Informationsteil zugehörige Identifikationsnummer beinhaltet, besteht.

9. Personenrufsystem nach einer der Ansprüche 2 bis 7, dadurch gekennzeichnet, daß die Steuerung des Systems durch die Erkennungseinrichtungen in der Steuerung des Prozessors der Basisstation zur Lieferung eines Steuersignals über eine Leitung zur Erzeugung eines Warnsignals in einer Warneinrichtung, die in der Umgebung des Benutzers installiert ist, besteht.

10. Personenrufsystem nach einer der Ansprüche 2 bis 7, dadurch gekennzeichnet, daß die Steuerung des Systems durch die Erkennungseinrichtungen in der Steuerung des Prozessors der Basisstation zur Lieferung eines Steuersignals zu der Warneinrichtung der Rufeinheit zur Erzeugung eines Warnsignals besteht, wobei die Bereitstellung des Steuersignals über eine Leitung und über Übertragungsglieder der Rufeinheit und eines Gestells, in dem die Rufeinheit angeordnet ist, erfolgt.

11. Personenrufsystem nach Anspruch 1, dadurch gekennzeichnet, daß der Speicher ein Speicher der Rufeinheit ist, daß die Rufeinheit ein Bedienungsorgan für die Eingabe eines bedingten Befehls in den Speicher hat, und daß die Erkennungseinrichtungen beim Erkennen eines Übergangs den Speicher lesen, um zu überprüfen, ob ein bedingter Befehl im Speicher vorhanden ist und wenn dies der Fall ist, die Warneinrichtung der Rufeinheit ansteuern, um ein dem Befehl zugehöriges Warnsignal zu erzeugen.

12. Personenrufsystem nach Anspruch 1, dadurch gekennzeichnet, daß der Informationsteil des Rufsignals einen bedingten Befehl beinhalten kann, die Basisstation, abhängig von den von der Station erhaltenen Steuersignalen, einen bedingten Befehl beinhaltendes Rufsignal übertragen kann, der Speicher ein Speicher der Rufeinheit ist, der Rechnerschaltkreis der Rufeinheit beim Empfang eines einen bedingten Befehl beinhaltenden Rufsignals, das für die Rufeinheit bestimmt ist, den bedingten Befehl in den Speicher plaziert, und die Erkennungseinrichtungen beim Erkennen eines Übergangs den Speicher lesen, um zu überprüfen, ob ein bedingter Befehl im Speicher vorhanden ist und wenn dies der Fall ist, die Warneinrichtung der Rufeinheit ansteuern, um ein dem Befehl zugehöriges Warnsignal zu erzeugen.

13. Personenrufsystem nach Anspruch 11 oder 12, dadurch gekennzeichnet, daß die Erkennungseinrichtungen Schaltorgane umfassen, welche in jeder Rufeinheit angebracht sind und welche das Vorhandensein eines Übergangs anzeigen, wenn die Rufeinheit in ein Gestell plaziert oder daraus entfernt wird.

14. Personenrufsystem gemäß des Anspruchs 11 oder 12, dadurch gekennzeichnet, daß die Schaltorgane aus Kontakten an der Rufeinheit und zwei Kurzschlußkontakten am Gestell bestehen, die die Kontakte der Rufeinheit kurzschließen, nachdem die Rufeinheit im Gestell plaziert ist.

15. Personenrufsystem nach Anspruch 11 oder 12, dadurch gekennzeichnet, daß die Schaltorgane ein Erkennungselement umfassen, das erkennt ob ein Ladestrom vom Gestell zur Rufeinheit fließt und das Erkennungselement einen Übergang durch Erkennen eines beginnenden oder aufhörenden Stromflusses anzeigt.

16. Personenrufsystem nach Anspruch 11 oder 12, dadurch gekennzeichnet, daß die Erkennungseinrichtungen ein lokales Aktivierungsorgan umfassen, das ein Aktivierungssignal überträgt, wobei eine Rufeinheit einen anderen Empfangsschaltkreis besitzt, der abgestimmt ist, um das Aktivierungssignal zu empfangen, und wobei ein Rechnerschaltkreis der Rufeinheit, der mit dem anderen Empfangsschaltkreis verbunden ist, einen Übergang beim Empfang des Aktivierungssignals anzeigt.

17. Personenrufsystem nach einem der vorhergehenden Ansprüche, dadurch gekennzeichnet, daß ein bedingter Befehl eine Bezugsnummer enthält, die sich auf eine Anzahl von vorher in einem Speicher der Basisstation oder in einem Anzeigespeicher der Rufeinheit gespeicherten Mitteilungen bezieht, und wenn das System angesteuert wird, um ein Warnsignal zu erzeugen, das System eine zu einem Wert der Bezugsnummer des bedingten Befehls gehörende Mitteilung aus dem Speicher liest und dem Benutzer der Rufeinheit anbietet.

## Revendications

1. Système d'appel de personnes comprenant :
une station principale centrale possédant une unité de traitement, qui est reliée à un moyen de commande et à un circuit de transmission principal et qui, selon les signaux de commande reçus par le moyen de commande, transmet, par l'intermédiaire du circuit de transmission principal, un signal d'appel de personnes qui comprend un numéro d'identification d'une unité portable d'appel de personnes et une section d'information ;
et un certain nombre d'unités portables d'appel de personnes, chacune possédant un circuit de réception qui est accordé pour recevoir un signal d'appel de personnes, un décodeur qui sépare le numéro d'identification et la section d'information d'un signal d'appel de personnes reçu, un registre qui stocke un numéro d'identification attribué à l'unité d'appel de personnes, un dispositif de comparaison qui compare les numéros d'identification reçu et attribué, un moyen d'alerte, et un circuit de traitement qui, selon le résultat de la comparaison, libère le moyen d'alerte pour produire une alerte selon la section d'information reçue,
une mémoire qui peut stocker une commande conditionnelle pour produire une alerte destinée à un utilisateur du système d'appel de personnes ;
un moyen pour entrer des commandes conditionnelles dans la mémoire ;
caractérisé par :
un moyen de détection qui détecte si un utilisateur d'une unité d'appel de personnes entre dans une zone spécifique ou système ou bien quitte cette zone ou ce système et qui, après détection d'un passage de ce type, commande le système, si une commande conditionnelle destinée à l'unité d'appel de personnes est stockée dans la mémoire, pour produire une alerte associée à la commande.

2. Système d'appel de personnes selon la revendication 1, caractérisé en ce que la mémoire est une mémoire de la station principale et en ce que le moyen de détection, lors de la détection d'un passage, détermine le numéro d'identification de l'unité d'appel de personnes de l'utilisateur, le moyen de détection lit ensuite la mémoire pour vérifier si une commande conditionnelle est stockée pour ce numéro d'identification et, si c'est le cas, commande le système pour produire une alerte associée à la commande.

3. Système d'appel de personnes selon la revendication 2, caractérisé en ce que le moyen d'entrée est constitué du moyen de commande.

4. Système d'appel de personnes selon la revendication 2, caractérisé en ce qu'une unité d'appel de personnes possède un circuit de transmission, qui, par l'intermédiaire d'un moyen de mise en oeuvre, peut être activé par l'utilisateur de l'unité d'appel de personnes pour transmettre un signal de programmation qui contient le numéro d'identification de l'unité d'appel de personnes et une commande conditionnelle, en ce que la station principale possède un circuit de réception qui est accordé pour recevoir le signal de programmation et en ce que la station principale, lors de la réception d'un signal de programmation, stocke la commande conditionnelle de ce dernier pour le numéro d'identification associé dans la mémoire.

5. Système d'appel de personnes selon l'une des revendications 1 à 4, caractérisé en ce que le moyen de détection comprend un système de détection qui, à l'extérieur des unités d'appel de personnes, détecte la présence d'une unité d'appel de personnes dans une fente d'une baie de stockage.

6. Système d'appel de personnes selon l'une des revendications 1 à 4, caractérisé en ce que le moyen de détection comprend un système d'enregistrement de temps qui enregistre la présence d'utilisateurs d'unités d'appel de personnes.

7. Système d'appel de personnes selon l'une des revendications 1 à 4, caractérisé en ce que le moyen de détection comprend une station d'interrogation locale possédant un circuit de transmission pour transmettre un signal d'interrogation, en ce qu'une unité d'appel de personnes comprend un circuit de réception qui est accordé pour recevoir le signal d'interrogation, en ce que l'unité d'appel de personnes, lors de la réception d'un signal d'interrogation, produit un signal de réponse qui contient le numéro d'identification de l'unité d'appel de personnes, et en ce que le moyen de détection comprend un moyen pour détecter le signal de réponse et pour séparer le numéro d'identification de cette dernière.

8. Système d'appel de personnes selon l'une des revendications 2 à 7, caractérisé en ce que la commande du système par le moyen de détection consiste en la commande de l'unité de traitement de la station principale pour la transmission d'un signal d'appel de personnes qui contient le numéro d'identification personnel appartenant à la commande conditionnelle et une section d'information associée.

9. Système d'appel de personnes selon l'une des revendications 2 à 7, caractérisé en ce que la commande du système par le moyen de détection consiste en la commande de l'unité de traitement de la station principale pour fournir, par l'intermédiaire d'un conducteur, un signal de commande pour la production d'une alerte vers un moyen d'alerte disposé au voisinage de l'utilisateur.

10. Système d'appel de personnes selon l'une des revendications 2 à 7, caractérisé en ce que la commande du système par le moyen de détection consiste en la commande de l'unité de traitement de la station principale pour fournir, par l'intermédiaire d'un conducteur et par l'intermédiaire du moyen de transmission de l'unité d'appel de personnes et d'une baie à l'intérieur de laquelle l'unité d'appel de personnes est placée, un signal de commande vers le moyen d'alerte de l'unité d'appel de personnes pour produire une alerte.

11. Système d'appel de personnes selon la revendication 1, caractérisé en ce que la mémoire est une mémoire de l'unité d'appel de personnes, et en ce que l'unité d'appel de personnes possède un moyen de mise en oeuvre pour entrer une commande conditionnelle dans la mémoire, et en ce que le moyen de détection, lors de la détection d'un passage, lit la mémoire pour vérifier si une commande conditionnelle est présente dans la mémoire et, si c'est le cas, commande le moyen d'alerte de l'unité d'appel de personnes pour produire une alerte associée à la commande.

12. Système d'appel de personnes selon la revendication 1, caractérisé en ce que la section d'information d'un signal d'appel de personnes peut contenir une commande conditionnelle, en ce que la station principale peut, en fonction des signaux de commande reçus par la station, transmettre un signal d'appel de personnes contenant une commande conditionnelle, en ce que la mémoire est une mémoire de l'unité d'appel de personnes, en ce que le circuit de traitement d'une unité d'appel de personnes, lors de la réception d'un signal d'appel de personnes contenant une commande conditionnelle destinée à l'unité d'appel de personnes, place la commande conditionnelle dans la mémoire, et en ce que le moyen de détection, lors de la détection d'un passage, lit la mémoire pour vérifier si une commande conditionnelle est présente dans la mémoire et, si c'est le cas, commande le moyen d'alerte de l'unité d'appel de personnes pour produire une alerte associée à la commande.

13. Système d'appel de personnes selon la revendication 11 ou 12, caractérisé en ce que le moyen de détection comprend des moyens de commutation qui sont ajustés à l'intérieur de chaque unité d'appel de personnes et qui indiquent la survenance d'un passage lorsque l'unité d'appel de personnes est placée dans une baie ou est enlevée de cette dernière.

14. Système d'appel de personnes selon la revendication 11 ou 12, caractérisé en ce que les moyens de commutation sont constitués de contacts de l'unité d'appel de personnes et d'une paire de contacts de court-circuit d'une baie qui court-circuitent les contacts de l'unité d'appel de personnes après que l'unité d'appel de personnes est placée dans la baie.

15. Système d'appel de personnes selon la revendication 11 ou 12, caractérisé en ce que les moyens de commutation comprennent un élément de détection qui détecte si un courant de charge s'écoule de la baie vers l'unité d'appel de personnes et en ce que l'élément de détection indique un passage lors de la détection d'un début ou d'un arrêt de courant de charge.

16. Système d'appel de personnes selon la revendication 11 ou 12, caractérisé en ce que le moyen de détection comprend une station d'activation locale qui transmet un signal d'activation, en ce qu'une unité d'appel de personnes possède un autre circuit de réception qui est accordé pour recevoir le signal d'activation et en ce qu'un circuit de traitement de l'unité d'appel de personnes, relié à l'autre circuit de réception, indique un passage lors de la réception du signal d'activation.

17. Système d'appel de personnes selon l'une quelconque des revendications précédentes, caractérisé en ce qu'une commande conditionnelle contient un numéro de référence qui se réfère à un nombre de messages précédemment stockés dans une mémoire de la station principale ou dans une mémoire d'affichage d'une unité d'appel de personnes et, lorsque le système est commandé pour produire une alerte, le système lit, à partir de la mémoire, un message appartenant à une valeur du numéro de référence de la commande conditionnelle et le présente à l'utilisateur de l'unité d'appel de personnes.
